(19) Europäisches Patentamt
European Patent Office
Office européen des brevets

(11) **EP 4 316 031 B1**

(12) **EUROPEAN PATENT SPECIFICATION**

(45) Date of publication and mention
of the grant of the patent:
**04.06.2025 Bulletin 2025/23**

(21) Application number: **21718260.9**

(22) Date of filing: **31.03.2021**

(51) International Patent Classification (IPC):
*H04W 52/36* (2009.01)     *H04W 52/24* (2009.01)
*H04W 52/14* (2009.01)

(52) Cooperative Patent Classification (CPC):
**H04W 52/367; H04W 52/242;** H04W 52/146

(86) International application number:
**PCT/SE2021/050295**

(87) International publication number:
**WO 2022/211688 (06.10.2022 Gazette 2022/40)**

(54) **RADIO NETWORK NODE AND METHOD PERFORMED IN A COMMUNICATION NETWORK**

FUNKNETZWERKKNOTEN UND IN EINEM KOMMUNIKATIONSNETZWERK DURCHGEFÜHRTES VERFAHREN

NOEUD DE RÉSEAU RADIO ET PROCÉDÉ MIS EN OEUVRE DANS UN RÉSEAU DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.02.2024 Bulletin 2024/06**

(73) Proprietor: **Telefonaktiebolaget LM Ericsson (publ)**
**164 83 Stockholm (SE)**

(72) Inventors:
• **KOLOMVAKIS, Nikolaos**
**151 60 Södertälje (SE)**
• **FAXÉR, Sebastian**
**112 48 Stockholm (SE)**

(74) Representative: **Zacco Sweden AB**
**P.O. Box 5581**
**Löjtnantsgatan 21**
**114 85 Stockholm (SE)**

(56) References cited:
**EP-A1- 2 124 471        US-A1- 2018 049 180**
**US-A1- 2019 313 343**

# EP 4 316 031 B1

**Description**

TECHNICAL FIELD

Embodiments herein relate to a radio network node and a method performed therein regarding communication in a wireless communication network. Furthermore, a computer program product and a computer-readable storage medium are also provided herein. Especially, embodiments herein relate to handling or enabling communication of a user equipment (UE) in the wireless communication network.

BACKGROUND

In a typical wireless communication network, UEs, also known as wireless communication devices, mobile stations, stations (STA) and/or wireless devices, communicate via a Radio access Network (RAN) to one or more core networks (CN). The RAN covers a geographical area which is divided into service areas or cell areas, with each service area or cell area being served by a radio network node such as an access node e.g. a Wi-Fi access point or a radio base station (RBS), which in some radio access technologies (RAT) may also be called, for example, a NodeB, an evolved NodeB (eNodeB) and a gNodeB (gNB). The service area or cell area is a geographical area where radio coverage is provided by the radio network node. The radio network node operates on radio frequencies to communicate over an air interface with the UEs within range of the access node. The radio network node communicates over a downlink (DL) to the UE and the UE communicates over an uplink (UL) to the radio network node. The radio network node may be a distributed node comprising a remote radio unit and a separated baseband unit.

A Universal Mobile Telecommunications System (UMTS) is a third generation telecommunication network, which evolved from the second generation (2G) Global System for Mobile Communications (GSM). The UMTS terrestrial radio access network (UTRAN) is essentially a RAN using wideband code division multiple access (WCDMA) and/or High-Speed Packet Access (HSPA) for communication with UEs. In a forum known as the Third Generation Partnership Project (3GPP), telecommunications suppliers propose and agree upon standards for present and future generation networks and UTRAN specifically, and investigate enhanced data rate and radio capacity. In some RANs, e.g. as in UMTS, several radio network nodes may be connected, e.g., by landlines or microwave, to a controller node, such as a radio network controller (RNC) or a base station controller (BSC), which supervises and coordinates various activities of the plural radio network nodes connected thereto. The RNCs are typically connected to one or more core networks.

Specifications for the Evolved Packet System (EPS) have been completed within the 3rd Generation Partnership Project (3GPP) and this work continues in the coming 3GPP releases, such as releases of 5G networks. The EPS comprises the Evolved Universal Terrestrial Radio Access Network (E-UTRAN), also known as the Long-Term Evolution (LTE) radio access network, and the Evolved Packet Core (EPC), also known as System Architecture Evolution (SAE) core network. E-UTRAN/LTE is a 3GPP radio access technology wherein the radio network nodes are directly connected to the EPC core network. As such, the Radio Access Network (RAN) of an EPS has an essentially "flat" architecture comprising radio network nodes connected directly to one or more core networks.

With the emerging 5G technologies also known as new radio (NR), the use of very many transmit- and receive-antenna elements makes it e.g. possible to utilize beamforming, such as transmit-side and receive-side beamforming. Transmit-side beamforming means that the transmitter can amplify the transmitted signals in a selected direction or directions, while suppressing the transmitted signals in other directions. Similarly, on the receive-side, a receiver can amplify signals from a selected direction or directions, while suppressing unwanted signals from other directions.

5G is the fifth generation of cellular technology and was introduced in Release 15 of the 3GPP standard. It is designed to increase speed, reduce latency, and improve flexibility of wireless services. The 5G system (5GS) includes both a new radio access network (NG-RAN) and a new core network (5GC).

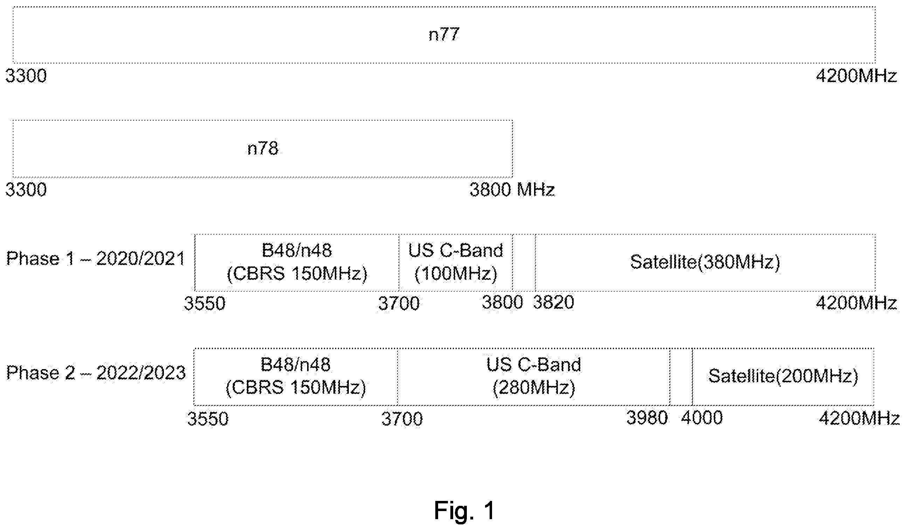

C-band (3.7-4.2 GHz) is the main mid band spectrum for 5G in the U.S. and it is currently used by satellite broadcasting. As shown in Fig. 1, part of the C-band will be re-farmed for 5G usage and it will be done in 2 phases. In the first phase (H1 2021) 100MHz will be cleared for 5G, with an additional 20MHz for guard-band. The rest remains for satellite use. In the second phase (2 years later), additional 180MHz (total 280MHz) will be re-farmed for 5G.

In order to protect incumbent satellite operators, the FCC requires a power flux density (PFD) limit of -124 dBW/m2/MHz as measured at the earth station (ES) antenna in its authorized band of operation (4.0-4.2 GHz in Phase 2 and 3.82-4.2 GHz in Phase 1). Additionally, a PFD limit of -16 dBW/m2/MHz applied across the 3.7-3.98 GHz band at the earth station antenna to prevent receiver blocking. Since a PFD limit is used rather than power spectral density (PSD) limit in the FCC requirement, the receiver antenna gain is not considered (i.e. a 0 dBi reference antenna shall be assumed). Due to this requirement, extraordinary measures may be needed at the infrastructure/network level to limit the out of band emission (OOBE) in both DL and UL in C-band deployments in the vicinities of satellite ESs.

Additionally, it is expected that UEs will be using the regular n77 band for the US C-band. As shown in Fig.1, these UEs have their passband between 3.3-4.2 GHz and so the satellite spectrum would be in-band and thus governed by the RAN4 Adjacent Channel Leakage Ratio (ACLR) requirement of 37 dB, which may provide sufficient suppression towards the ESs. Thus, it is expected that in some cells in vicinity of satellite ESs, the maximum UE power may need to be limited.

The RAT next generation mobile wireless communication system (5G) or NR, supports a diverse set of use cases and a diverse set of deployment scenarios. The later includes deployment at both low frequencies (100s of MHz), similar to the RAT LTE today, and very high frequencies (mm waves in the tens of GHz).

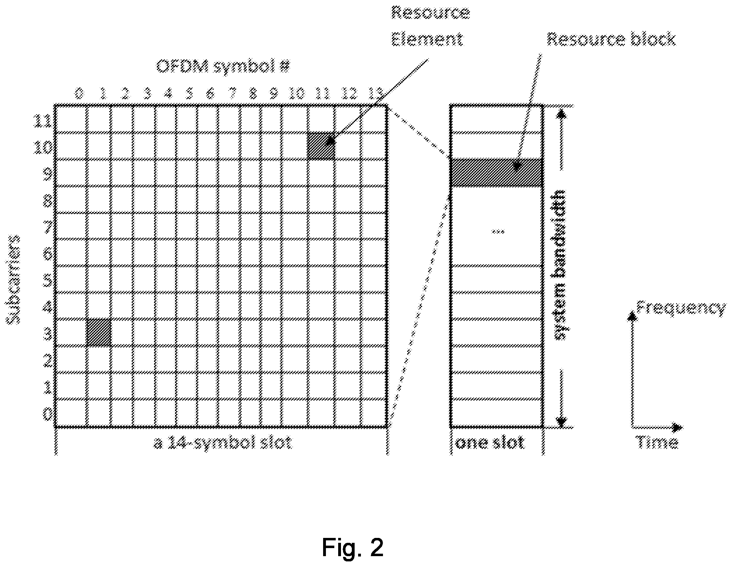

Similar to LTE, NR uses Orthogonal Frequency Division Multiplexing (OFDM) in the DL (i.e. from a network node (NN), gNB, eNB, or base station, to a UE). The basic NR physical resource over an antenna port can thus be a time-frequency grid as illustrated in **Fig. 2,** where a resource block (RB) in a 14-symbol slot is shown. An RB corresponds to 12 contiguous subcarriers in the frequency domain. RBs are numbered in the frequency domain, starting with 0 from one end of the system bandwidth. Each resource element (RE) corresponds to one OFDM subcarrier during one OFDM symbol interval.

Different subcarrier spacing values are supported in NR. The supported subcarrier spacing values (also referred to as different numerologies) are given by $\Delta f = (15 \times 2^\alpha)\ kHz$ where $\alpha \in (0,1,2,3,4)$. $\Delta f = 15 kHz$ is the basic (or reference) subcarrier spacing that is also used in LTE.

In the time domain, DL and UL transmissions in NR will be organized into equally sized subframes (SF) of 1 ms each, similar to LTE. An SF is further divided into multiple slots of equal duration. The slot length for subcarrier spacing $\Delta f = (15 \times 2^\alpha)\ kHz$ is $1/2^\alpha$ ms. There is only one slot per SF at $\Delta f = 15 kHz$ and a slot consists of 14 OFDM symbols.

DL transmissions are dynamically scheduled, i.e., in each slot the gNB transmits DL control information (DCI) about which UE data is to be transmitted to and which RBs in the current DL slot the data is transmitted on. This control information is typically transmitted in the first one or two OFDM symbols in each slot in NR. The control information is carried on the Physical Downlink Control Channel (PDCCH) and data is carried on the Physical Downlink Shared Channel (PDSCH). A UE first detects and decodes PDCCH and if a PDCCH is decoded successfully, it then decodes the corresponding PDSCH based on the decoded control information in the PDCCH.

In addition to PDCCH and PDSCH, there are also other channels and reference signals (RS) transmitted in the DL.

UL data transmissions, carried on Physical Uplink Shared Channel (PUSCH), are also dynamically scheduled by the gNB by transmitting a DCI. In case of time division duplex (TDD) operation, the DCI (which is transmitted in the DL region) always indicates a scheduling offset so that the PUSCH is transmitted in a slot in the UL region.

Existing infrastructure/network level strategies for uplink out-of-band (OOB) interference mitigation limits the UE maximum power level in cells in vicinities of an ES. Such UE power reduction will negatively impact the UL coverage and throughput in the cell.

US2019/313343A1 patent application (UE power control for multiple uplink carriers; MOLAVIANJAZI EBRAHIM [US] ET AL) discloses UE power control for multiple uplink carriers.

US2018/049180A1 patent application (Method and apparatus for determining transmission resource and transmission power in wireless communication system; LEE NAM JEONG [KR] ET AL) discloses a communication technique for combining a 5G communication system that supports higher data transmission rates after 4G systems with IoT technology.

EP2124471A1 patent application (Base station device and communication control method; NTT DOCOMO INC [JP]) discloses a base station apparatus capable of communicating with user equipment terminals using an uplink shared channel.

SUMMARY

An object of embodiments herein is to provide a mechanism that enables communication in a reliable and improved manner.

According to an aspect the object is achieved by providing a method performed by a radio network node for handling communication in a wireless communication network. The radio network node schedules a UE served by the radio network node in a first cell of a first RAT, to a resource part of a total bandwidth for the first RAT for communicating, wherein resource parts of the total bandwidth have different maximum power limits, and the resource part is selected based on a pathloss of the UE and wherein scheduling of the UE comprise scheduling UEs according to a UE list comprising UEs arranged in an order defined by maximum transmission power of the UEs, matched with a frequency list defining resource parts ordered in a maximum power limit order.

It is furthermore provided herein a computer program product comprising instructions, which, when executed on at least one processor, cause the at least one processor to carry out any of the methods herein, as performed by the radio network node. It is additionally provided herein a computer-readable storage medium, having stored thereon a computer program product comprising instructions which, when executed on at least one processor, cause the at least one processor to carry out the method according to any of the methods herein, as performed by the radio network node.

# EP 4 316 031 B1

According to yet another aspect the object is achieved by providing a radio network node for handling communication in a wireless communication network. The radio network node is configured to schedule a UE served by the radio network node in a first cell of a first RAT, to a resource part of a total bandwidth for the first RAT for communicating, wherein resource parts of the total bandwidth have different maximum power limits, and the resource part is selected based on a pathloss of the UE, wherein the radio network node is configured to schedule UEs according to a UE list comprising UEs arranged in an order defined by maximum transmission power of the UEs, matched with a frequency list defining resource parts ordered in a maximum power limit order.

Embodiments herein relate to methods that reduce the out-of-band interference generated towards a second network node such as an ES without sacrificing UL coverage or performance. It is herein suggested a new approach to reduce the uplink OOB interference from UEs towards ESs. More precisely, the channel bandwidth is split into resource parts such as scheduling blocks (SB), where a SB is the smallest resource unit (e.g. it usually consists of two resource blocks) a scheduler can assign to a UE. In principal, different SBs can have different maximum power limits also referred to as maximum uplink power limits or maximum transmission power limits, where the closer a SB is to the satellite's spectrum the lower its maximum uplink power limit. The motivation behind this distributed maximum allowed uplink power is that UEs that are scheduled onto the higher part of the spectrum (i.e. closer to the ES's spectrum) have a higher level of OOBE than UEs that are scheduled to the lower part and thus the latter ones could operate with higher maximum uplink power limits.

The maximum uplink power limits of the SBs may be determined by a desired level of OOB emissions and it depends on how many UEs can simultaneously interfere with the ESs and the desired minimum distance between UEs and ESs. Embodiments herein allow an operator to schedule resources to the UE in order for UEs to transmit with higher uplink power at resources not causing OOB interference leading to a minimal impact on a cell and UE throughput. Thus, embodiments herein reduce OOB interference and hence, provides a more reliable and improved communication in the wireless communication network.

BRIEF DESCRIPTION OF THE DRAWINGS

Embodiments will now be described in more detail in relation to the enclosed drawings, in which:

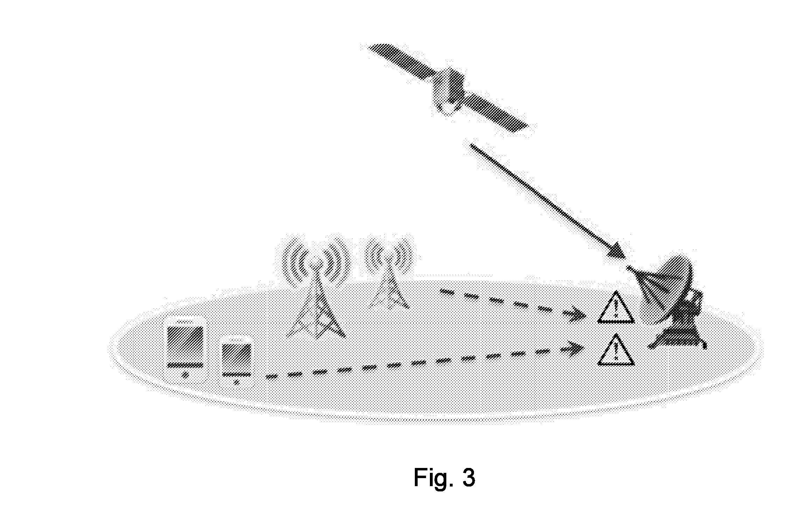

Figs. 1-3 are illustrations according to prior art;
Fig. 4 is a schematic overview depicting a communication network according to embodiments herein;
Fig. 5 is a combined signalling scheme and flowchart according to embodiments herein;
Fig. 6 is an overview depicting resource parts according to embodiments herein;
Fig. 7 is a schematic graph illustrating operation statistics according to embodiments herein;
Fig. 8 is a flowchart depicting a method performed by a radio network node according to embodiments herein;
Fig. 9 is a block diagram depicting a radio network node according to embodiments herein;
Fig. 10 schematically illustrates a telecommunication network connected via an intermediate network to a host computer;
Fig. 11 is a generalized block diagram of a host computer communicating via a base station with a user equipment over a partially wireless connection; and
Figs. 12-15 are flowcharts illustrating methods implemented in a communication system including a host computer, a base station and a user equipment.

DETAILED DESCRIPTION

Embodiments herein are described in the context of 5G/NR but the same concept can also be applied to other wireless communication system such as 4G/LTE. Embodiments herein may be described within the context of 3GPP NR radio technology (3GPP TS 38.300 V15.2.0 (2018-06)), e.g. using gNB as the radio network node. It is understood, that the problems and solutions described herein are equally applicable to wireless access networks and user-equipments (UEs) implementing other access technologies and standards. NR is used as an example technology where embodiments are suitable, and using NR in the description therefore is particularly useful for understanding the problem and solutions solving the problem. In particular, embodiments are applicable also to 3GPP LTE, or 3GPP LTE and NR integration, also denoted as nonstandalone NR.

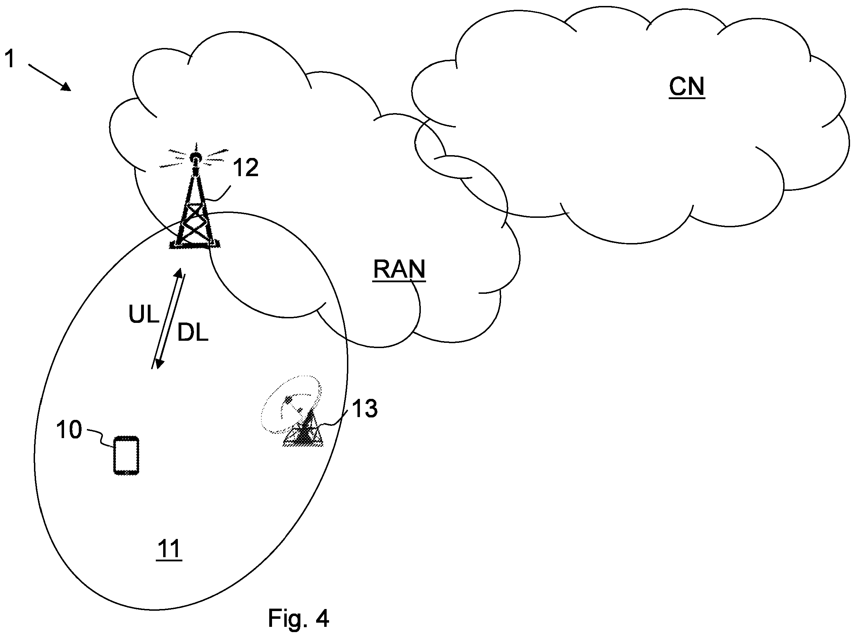

Embodiments herein relate to wireless communication networks in general. **Fig. 4** is a schematic overview depicting **a wireless communication network 1.** The wireless communication network 1 comprises e.g. one or more RANs and one or more CNs. The wireless communication network 1 may use one or a number of different technologies, such as Wi-Fi, Long Term Evolution (LTE), LTE-Advanced, NR, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations. Embodiments herein relate to recent technology trends that are of particular interest in 5G systems, however, embodi-

4

ments are also applicable in further development of the existing communication systems such as e.g. a WCDMA or a LTE system.

In the wireless communication network 1, wireless devices e.g. a UE 10 such as a mobile station, a non-access point (non-AP) station (STA), a STA, a user equipment and/or a wireless terminal, communicate via one or more Access Networks (AN), e.g. RAN, to one or more core networks (CN). It should be understood by the skilled in the art that "UE" is a non-limiting term which means any terminal, wireless communication terminal, user equipment, Machine Type Communication (MTC) device, Device to Device (D2D) terminal, internet of things (IoT) operable device, or node e.g. smart phone, laptop, mobile phone, sensor, relay, mobile tablets or even a small base station capable of communicating using radio communication with a network node within an area served by the network node.

The communication network 1 comprises **a first radio network node 12** providing e.g. radio coverage over a geographical area, **a first service area 11** i.e. a first cell, of a radio access technology (RAT), such as NR, LTE, Wi-Fi, WiMAX or similar. The first radio network node 12 may be a transmission and reception point, a computational server, a base station e.g. a network node such as a satellite, a Wireless Local Area Network (WLAN) access point or an Access Point Station (AP STA), an access node, an access controller, a radio base station such as a NodeB, an evolved Node B (eNB, eNodeB), a gNodeB (gNB), a base transceiver station, a baseband unit, an Access Point Base Station, a base station router, a transmission arrangement of a radio base station, a stand-alone access point or any other network unit or node depending e.g. on the radio access technology and terminology used. The first radio network node 12 may alternatively or additionally be a controller node or a packet processing node or similar. The first radio network node 12 may be referred to as source node, source access node or a serving network node wherein the first service area 11 may be referred to as a serving cell, source cell or primary cell, and the first radio network node communicates with the UE 10 in form of DL transmissions to the UE 10 and UL transmissions from the UE 10. The first radio network node 12 may be a distributed node comprising a baseband unit and one or more remote radio units. It should be noted that a service area may be denoted as cell, beam, beam group or similar to define an area of radio coverage.

Further is **a second network node 13** providing e.g. radio coverage over a geographical area of a radio access technology (RAT), such as a non-terrestrial communication network. The second network node 13 may be a satellite dish, a satellite receiver and transmitter, a computational server, a stand-alone access point or any other network unit or node depending e.g. on the radio access technology and terminology used. The second network node 13 may be referred to as a non-terrestrial node, or a satellite node.

According to embodiments herein the first radio network node 12, also referred herein as just the radio network node, schedules communication of the UE 10 served in the first cell 11, to a resource part, such as a scheduling block (SB), of a total bandwidth for the first RAT, wherein resource parts of the total bandwidth have different maximum power limits, and the resource part is selected based on a pathloss of the UE 10. Pathloss herein indicated by maximum transmission power of the UE 10.

Embodiments herein give an operator the opportunity to schedule UEs with higher pathloss to the lower part of the spectrum and allow them to transmit with higher uplink power. This feature can reduce the OOB emissions to the desired level with the minimal impact on cell and user throughput. An additional advantage of distributing the maximum uplink power over the channel is that it can be static. That is, it does not depend on the position of UEs and thus positioning, or UE-specific power control is not needed which can increase the complexity of the system considerably.

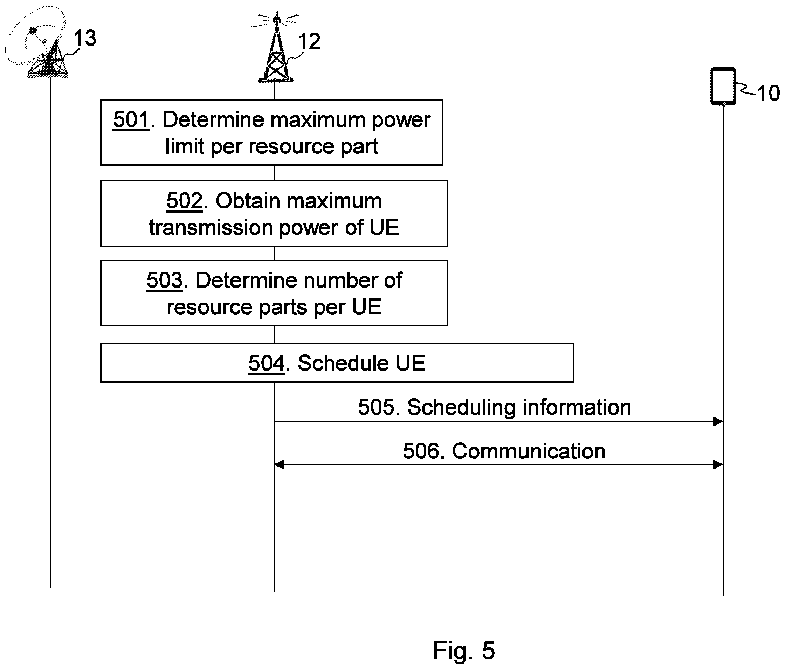

**Fig. 5** is a combined flowchart and signalling scheme according to embodiments herein.

**Action 501.** The radio network node 12 may determine a maximum power limit for one or more resource parts, i.e. SBs, of the total bandwidth. The resource parts may be listed in a list e.g. the resource parts are listed in a frequency list in an order of frequencies and thus lower frequencies indicate higher maximum power limits.

The radio network node 12 may measure OOBE for each SB as a function of UE's transmission power in order to define a function of power $f_n(p)$. The radio network node 12 may further determine a maximum total allowed level of OOBE $L$ transmitted from UEs towards the second network node 13. The radio network node 12 may then determine number of UEs K that can interfere simultaneously with the second network node 13, and then define the maximum uplink power $P_n^{max}$ for the n-th SB according to the equation

$$L_n(dBm) = L(dBm) - 10 log_{10}(K) = f_n(P_n^{max})$$

**Action 502.** The radio network node 12 may further obtain or determine a maximum transmission power of one or more UEs such as the UE 10. The radio network node 12 may determine pathloss for the UE and thus determine maximum transmission based on the pathloss. For example, the radio network node 12 may determine the transmission power of the UEs to be scheduled, and may sort the UEs in an order of transmission power in a UE list.

**Action 503.** The radio network node 12 may further determine a number of resource parts each UE needs to have schedule.

**Action 504.** The radio network node 12 schedules communication of the UE 10 to a resource part of the total bandwidth, wherein resource parts of the total bandwidth have different maximum power limits, and the resource part is selected based on a pathloss of the UE 10. For example, the radio network node 12 may schedule the UE 10 to the resource part taking into account the determined maximum transmission power for one or more resource parts, the obtained maximum transmission power of the UE 10 and/or number of resource parts needed by the UE 10. The radio network node 12 may e.g. allocate resource part/s of lowest frequency (frequencies below a threshold) to UE or UEs with highest transmission power in the buffer (maximum transmission above a threshold). The radio network node 12 may for example, list the resource parts in a frequency list in an order of frequencies and allocate the UEs in the UE list (decreasing maximum transmission power) to the resource parts in the frequency list (increasing frequencies).

**Action 505.** The radio network node 12 may then transmit information relating to the scheduling so called scheduling information or control information. The radio network node 12 may for example transmit control information or a grant indicating the resource part to use for the UE 10. The radio network node 12 may in some embodiments transmits a TPC indicating the maximum transmission power to the UE 10, wherein the TPC is based on the determined maximum transmission of the resource part and/or the obtained maximum transmission power of the UE 10. For example, the TPC indicates an $+\Delta$ or $-\Delta$ offset in transmission power, where $\Delta$ takes specific values (e.g. $\Delta=1,3$). This means that if the initial maximum transmission power of a UE is 20 dBm but the maximum power limit is 18 dBm, then, the radio network node 12 may transmit two TPC commands (or two TTIs) to reach this level. The first will indicate $\Delta=-1$ and the second $\Delta=-1$.

**Action 506.** The UE 10 may then perform communication based on the received information relating to the scheduling.

Nonlinear hardware constraint causes a radio system to emit spurious power outside its allocated bandwidth. This OOB radiation or emission could harm the operation of a victim wireless system by interfering with its signal. Therefore, the amount of OOB radiation a transmitter can emit is regulated. Nevertheless, when the victim is a ground station, FCC has set additional requirements at the receiver of the ground station due to its higher than other systems sensitivity to interference.

It is herein disclosed a new scheduling scheme, namely based on *distributed* maximum *uplink power,* in order to meet the uplink OOB emissions requirements stemming from UEs towards the nearby ground stations with the minimal impact on cell and user throughput.

The principal idea of distributing the power over the channel is that **first** the OOB emissions are not symmetric with respect to the carrier frequency. For instance, simulations of power spectrum density of a UE show that when one RB is scheduled to the upper right of the 40MHz channel, intermodulation products (i.e. peaks) within the OOBE (which lie in the satellite's spectrum) appear only on the higher adjacent band while the lower adjacent band is clean from intermodulation products. Thus, UEs scheduled in the higher part of the channel need more power backoff than UEs scheduled in the lower part. **Secondly,** UEs that experience higher pathloss should suffer less from the OOBE mitigation in order to have the minimal impact on the cell throughput. Thus, these UEs may be scheduled to the lower part of the channel where higher transmit power will be allowed.

There are mainly two different ways of power control mechanism. One is called Open Loop Power control and the other one is called Closed Loop Power Control. In Open Loop Control, UEs determine their transmission power by their own power setting algorithm. This power setting algorithm is based on internal setting or measurement data by the UE. There is no feedback input from the radio network node 12 except the configuration of the Open Loop Power Control parameters which define the Signal to Noise Ratio (SNR) target P0, fractional path loss compensation factor $\alpha$, maximum power $P_{c,max}$ as well as which reference signal to measure path loss on.

In the Closed Loop Power Control, the UE's transmission power is controlled by some feedback input from the radio network node 12. Once initial physical random access channel (PRACH) is detected, the UE power is controlled dynamically by Transmission Power Control (TPC) command, in e.g. medium access control (MAC) control element (CE) or TPC field in downlink control indicator (DCI).

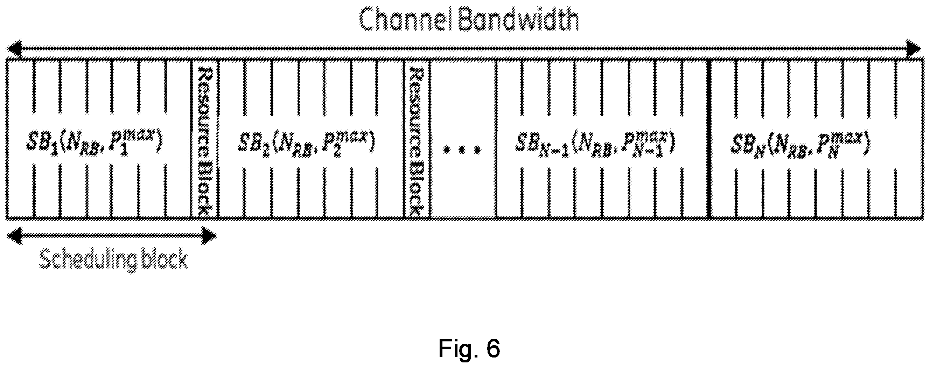

Next, the distributed power restriction according to embodiments herein is presented based on both Open and Closed Loop Power Control. As shown in **Fig. 6,** the channel bandwidth is split into scheduling blocks (SB). A SB is the smallest resource unit a scheduler of the radio network node 12 can assign to the UE 10. Furthermore, each SB has a dedicated maximum uplink power $P_k^{max}$, $1 \le k \le N,$ where $k$ denotes the k-th SB and $N$ denotes the total SBs in the channel. In general, the closer, in frequency, a *SB* is to the second RAT's frequency spectrum the lower its maximum uplink transmission power is. That is,

$$P_n^{max} \le P_m^{max}, \qquad 1 \le n \le m \le N$$

This condition will limit the out-of-band interference towards the second network node 13 while the maximum uplink transmission power depends on the desired level of OOB interference. Furthermore, in order to limit the performance degradation, UEs with higher pathloss are scheduled to the lower SBs, i.e. *SBs* with higher maximum power limit. The procedure of scheduling UEs in each transmission time interval (TTI) is the following:

1. Determine the transmission power (maximum transmission power) of the UEs to be scheduled
2. Determine the number of scheduling blocks each UE need to have scheduled
3. Sort the UEs in descending order of transmission power in the UE list.
4. Initiate the procedure of frequency resources allocation starting from the lowest to higher available contiguous frequency resources

    a. Start with the UE with the highest transmission power in the buffer
    b. Determine a candidate frequency-domain resource allocation comprising a subset of scheduling blocks from the set of candidate scheduling blocks
    c. If Open Loop Power Control is chosen

        i. Rejecting the candidate frequency resource allocation if the transmission power of the UE exceeds the maximum allowed transmission power (maximum power limit) of at least one of the scheduling blocks comprised in the candidate frequency-domain resource allocation and accepting the candidate frequency resource allocation otherwise
        ii. Repeat step 4 until all UEs have been checked for potential scheduling
        iii. UEs that are not scheduled, they are considered in the next TTI with higher priority

    d. If Closed Loop Power Control is chosen

        i. TPC commands are transmitted by the radio network node 12 towards the UE to decrease its uplink transmission power by $\delta$ if it exceeds the maximum allowed transmission power of at least one of the scheduling blocks comprised in the candidate frequency-domain resource allocation and accepting the candidate frequency resource allocation otherwise
        ii. Reject the candidate frequency resource allocation if the decreased transmission power of the UE exceeds the maximum allowed transmission power of at least one of the scheduling blocks comprised in the candidate frequency-domain resource allocation and accepting the candidate frequency resource allocation otherwise
        iii. Repeat step 4 until all UEs have been checked for potential scheduling
        iv. UEs that are not scheduled, they are considered in the next TTI

It is herein disclosed a methodology for obtaining the maximum allowed transmission power, i.e. the maximum power limit, for each scheduling block. The first step is to define the function $f_n(p)$ which yields the maximum level of OOBE for the n-th scheduling block (e.g. by conducting measurements) as a function of UE's transmission power $p$.

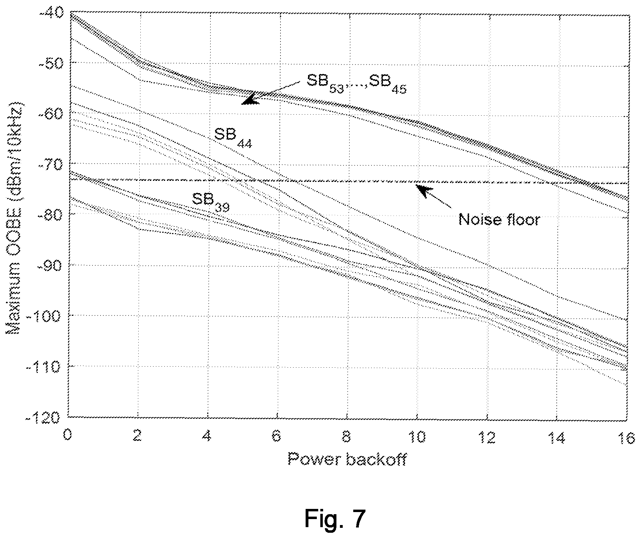

**Figure 7** shows a Maximum OOBE per scheduling block as a function of the power backoff. It is shown that the resource parts or SBs of higher frequencies SB53-SB45 have higher OBBE and should have a lower maximum power limit.

Depending on the level of out-of-band interference, the maximum power limit per scheduling block is chosen such that all scheduling block meet the desired level of out-of-band emissions. The procedure of defining the maximum power limit per SB is the following:

1. Measure the OOBE for each SB as a function of UE's transmission power in order to define $f_n(p)$
2. Determine the maximum total allowed level of OOBE L transmitted from UEs towards a satellite dish such as the second network node 13
3. Determine the number of UEs K that can interfere simultaneously with the satellite dish

4. Define the maximum power limit $P_n^{max}$ for the $n$-th SB according to the equation

$$L_n(dBm) = L(dBm) - 10log_{10}(K) = f_n(P_n^{max})$$

As an example, consider a simulated OOBE (dBm/10kHz). In this example, an uplink channel of 40MHz with subcarrier spacing 30kHz and 12 subcarriers per physical resource block (PRB) are assumed. Additionally, one SB consists of 2 PRBs and the total number of PRBs in the channel is 106.

If the level of maximum OOBE from a UE (or SB) towards a satellite is $L_n$ = - 40 dBm/MHz (or - 60dBm/10kHz), ($n$ = 1, ... $N$), then the maximum uplink power for each SB is given by Table 1. The OOBE may be defined as a function of the power backoff and thus the maximum UL power, i.e. maximum power limit, is calculated as the difference between the total maximum power (i.e. 23 dBm) and power backoff.

Table 1: Maximum power limit per SB when the maximum OOBE per SB is - 60dBm/10KHz

| $n$ (SB index) | 53-46 | 45 | 44 | 43 | 42-1 |
|---|---|---|---|---|---|
| $P_n^{max}$ (dBm) | 14.5 | 15 | 21 | 22 | 23 |

Table 2: Maximum power limit per SB when the maximum OOBE per SB is: -73dBm/10KHz

| $n$ (SB index) | 53-46 | 45 | 44 | 43 | 42-41 | 40 | 39-37 | 36-1 |
|---|---|---|---|---|---|---|---|---|
| $P_n^{max}$ (dBm) | 8.5 | 9.1 | 16.5 | 17.5 | 18 | 19 | 22 | 23 |

Furthermore, the interpretation of the level of OOBE in terms of minimum distance between the UEs and ES (assuming free space pathloss) and the number of simultaneously interfering UEs in order to meet the FCC requirements is shown in Table 3. For example, if the maximum allowed level of OOBE per SB is $L_n$ = -40dBm/MHz (or - 60 dBm/10kHz) then the total maximum power limit towards the satellite depends on the maximum number of UEs that can interfere with the satellite, i.e. $L(dBm) = L_n(dBm) + 10log_{10}(K)$. Notice that the lower the level of OOBE is achieved per SB the more UEs can interfere with the satellite or the less the distance a UE can approach the satellite.

Table 3: Interpretation of total OOBE towards a satellite in terms of distance and interfering UEs

| $L_n$ (dBm/MHz) | UE-ES minimum distance (m) | Interfering mobile devices ($K$) |
|---|---|---|
| -40 | 150 | 1 |
| | 450 | 10 |
| -53 | 36 | 1 |
| | 85 | 10 |

Finally, it is worth mentioning that according to a UE's measurements the unwanted emissions cannot be less than -53dBm/MHz (or -73dBm/10kHz) and thus it cannot be achieved better emissions than this level neither by power backoff nor restricting PRBs to the lower part of the UL channel. This is due to the spurious emissions which are not included in the OOBE and are generally caused by unwanted transmitter effects such as harmonics emission, parasitic emissions, intermodulation products, and frequency conversion products.

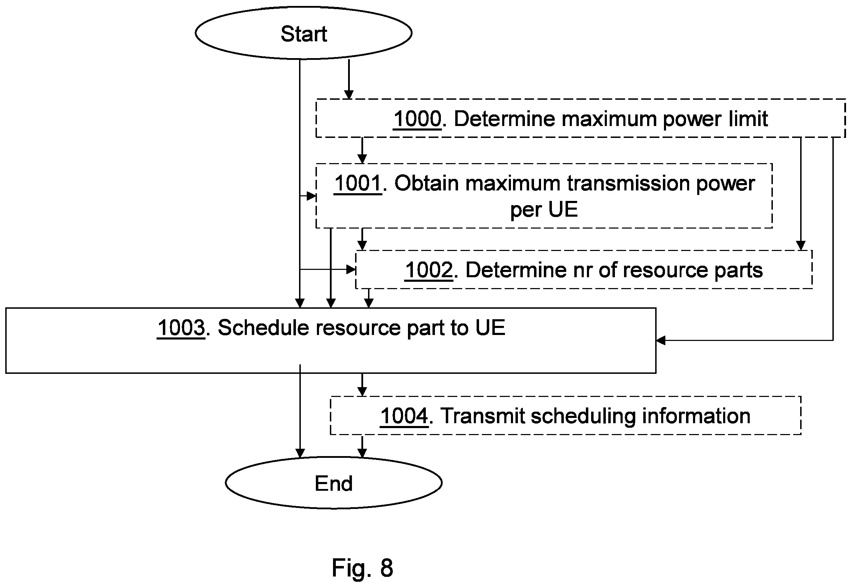

The method actions performed by the radio network node 12 for handling communication in the wireless communication network 1 according to embodiments herein will now be described with reference to a flowchart depicted in Fig. 8. The actions do not have to be taken in the order stated below, but may be taken in any suitable order. Actions performed in some embodiments are marked with dashed boxes.

**Action 1000.** The radio network node 12 may determine the different maximum power limits of one or more of the resource parts of the total bandwidth. The different maximum power limits may be related to the bandwidth distance to the second bandwidth allocated to the second RAT. For example, a first resource part of the total bandwidth that is closer to the second bandwidth than a second resource part of the total bandwidth, has a lower maximum power limit than the second resource part. The radio network node 12 may determine the different maximum power limits by: measuring out of band emission of each resource part as a function of UE's transmission power; determining a total level of out of band emissions $L$ transmitted from UEs towards a second network node of the second RAT; determining number of UEs $K$ that are able to simultaneously interfere with the second network node; and defining the maximum power limit for the $n$th resource part $P_n^{max}$ according to the equation

$$L_n(dBm) = L(dBm) - 10log_{10}(K) = f_n(P_n^{max})$$

**Action 1001.** The radio network node 12 may obtain a maximum transmission power of the UE 10. The radio network node 12 may determine pathloss of one or more UEs.

**Action 1002.** The radio network node 12 may determine number of resource parts needed for the UE 10, e.g. number so SBs.

**Action 1003.** The radio network node 12 schedules the UE 10 served by the radio network node 12 in the first cell of the first RAT, to a resource part of the total bandwidth for the first RAT for communicating, wherein resource parts of the total bandwidth have different maximum power limits, and the resource part is selected based on the pathloss of the UE. The first RAT may be a terrestrial RAT e.g. LTE or NR and the second RAT may be a non-terrestrial RAT such as a satellite network. The radio network node 12 may schedule the UE 10 based on one or more of the following: determined maximum power limit of radio resources; obtained maximum transmission power of the UE; and determined number of resource parts needed. The radio network node 12 may schedule UEs according to a UE list comprising UEs arranged in an order defined by maximum transmission power of the UEs, matched with frequency list defining resource parts ordered in a maximum power limit order.

**Action 1004.** The radio network node 12 may then transmit scheduling information such as a grant indicating the scheduling and/or a TPC indicating the adjusted maximum transmission power. For example, the radio network node 12 may schedule the UE 10 by adjusting obtained maximum transmission power of the UE 10 to a maximum transmission power limit of the selected resource part, and may then transmit a transmit power command comprising an indication of the adjusted maximum transmission power.

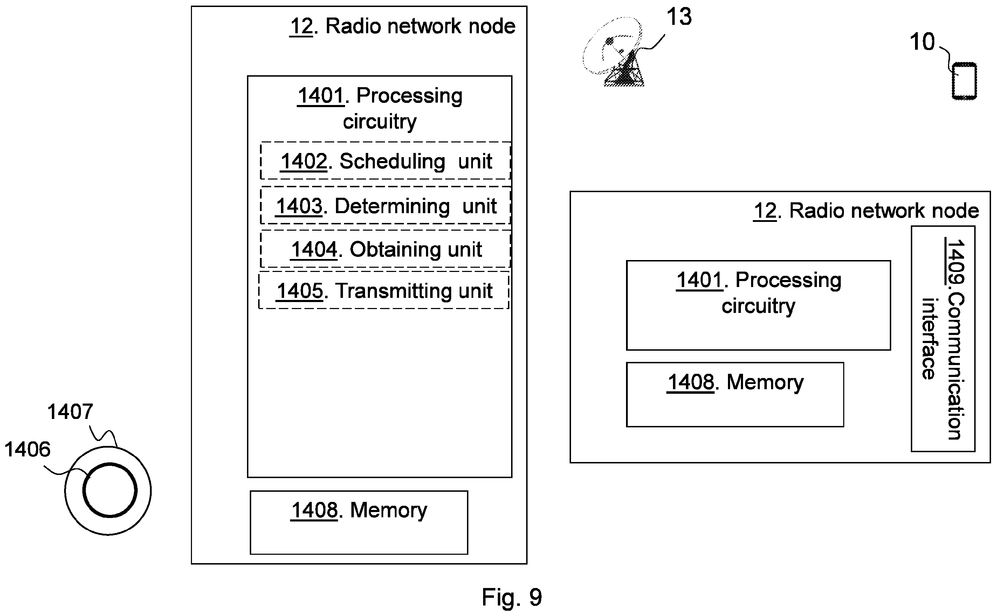

**Fig. 9** is a block diagram depicting the radio network node 12, in two embodiments, for handling communication, e.g. handling, enabling or performing communication, in the wireless communication network 1 according to embodiments herein.

The radio network node 12 may comprise **processing circuitry 1401,** e.g. one or more processors, configured to perform the methods herein.

The radio network node 12 may comprise a **scheduling unit 1402,** e.g. a scheduler. The radio network node 12, the processing circuitry 1401 and/or the scheduling unit 1402 is configured to schedule the UE 10 served by the radio network node in the first cell of the first RAT, to the resource part of the total bandwidth for the first RAT for communicating, wherein resource parts of the total bandwidth have different maximum power limits. The radio network node 12, the processing circuitry 1401 and/or the scheduling unit 1402 is configured to select the resource part based on a pathloss of the UE 10. The different maximum power limits may be related to a bandwidth distance to the second bandwidth allocated to the second RAT. The first resource part of the total bandwidth that is closer to the second bandwidth than the second resource part of the total bandwidth, has a lower maximum power limit than the second resource part. The first RAT may be a terrestrial RAT and the second RAT may be a non-terrestrial RAT. The radio network node 12, the processing circuitry 1401 and/or the scheduling unit 1402 may be configured to schedule UEs according to the UE list comprising UEs arranged in the order defined by maximum transmission power of the UEs, matched with the frequency list defining resource parts ordered in the maximum power limit order.

The radio network node 12 may comprise **a determining unit 1403.** The radio network node 12, the processing circuitry 1401 and/or the determining unit 1403 may be configured to determine the different maximum power limits of the one or more of the resource parts of the total bandwidth. The radio network node 12, the processing circuitry 1401 and/or the determining unit 1403 may be configured to determine the different maximum power limits by: measuring out of band emission of each resource part as a function of UE's transmission power; determining a total level of out of band emissions L transmitted from UEs towards a second network node of the second RAT; determining number of UEs K that are able to simultaneously interfere with the second network node; and defining the maximum power limit for the nth resource part $P_n^{max}$ according to the equation

$$L_n(dBm) = L(dBm) - 10log_{10}(K) = f_n(P_n^{max}).$$

The radio network node 12, the processing circuitry 1401 and/or the determining unit 1403 may be configured to determine number of resource parts needed for the UE.

The radio network node 12 may comprise **an obtaining unit 1404.** The radio network node 12, the processing circuitry 1401 and/or the obtaining unit 1404 may be configured to obtain the maximum transmission power of the UE.

The radio network node 12, the processing circuitry 1401 and/or the scheduling unit 1402 may be configured to schedule the UE 10 based on one or more of the following: determined maximum power limit of radio resources; obtained maximum transmission power of the UE; and determined number of resource parts needed.

The radio network node 12 may comprise a **transmitting unit 1405,** e.g. a transmitter or a transceiver. The radio network node 12, the processing circuitry 1401 and/or the transmitting unit 1405 may be configured to transmit scheduling information to the UE 10 relating to the scheduling of the UE 10. The radio network node 12, the processing circuitry 1401 and/or the scheduling unit 1402 may be configured to schedule the UE by adjusting obtained maximum transmission power of the UE to a maximum transmission power limit of the selected resource part, and the radio network node 12, the processing circuitry 1401 and/or the transmitting unit 1405 may be configured to transmit the transmit power command comprising the indication of the adjusted maximum transmission power.

The radio network node 12 further comprises a **memory 1408.** The memory comprises one or more units to be used to store data on, such as indications, scheduling information, maximum transmission powers, spectrum information, allocated resources, strengths or qualities, grants, messages, execution conditions, user data, reconfiguration, configurations, scheduling information, timers, applications to perform the methods disclosed herein when being executed, and similar. The radio network node 12 comprises **a communication interface 1409** comprising transmitter, receiver, transceiver and/or one or more antennas. Thus, it is herein provided the radio network node for handling communication in a wireless communications network, wherein the radio network node comprises processing circuitry and a memory, said memory comprising instructions executable by said processing circuitry whereby said radio network node 12 is operative to perform any of the methods herein.

The methods according to the embodiments described herein for the radio network node 12 are respectively implemented by means of e.g. **a computer program product 1406** or a computer program product, comprising instructions, i.e., software code portions, which, when executed on at least one processor, cause the at least one processor to carry out the actions described herein, as performed by the radio network node 12. The computer program product 1406 may be stored on **a computer-readable storage medium 1407**, e.g. a universal serial bus (USB) stick, a disc or similar. The computer-readable storage medium 1407, having stored thereon the computer program product, may comprise the instructions which, when executed on at least one processor, cause the at least one processor to carry out the actions described herein, as performed by the radio network node 12. In some embodiments, the computer-readable storage medium may be a non-transitory or transitory computer-readable storage medium.

In some embodiments a more general term "radio network node" is used and it can correspond to any type of radio network node or any network node, which communicates with a UE and/or with another network node. Examples of network nodes are NodeB, Master eNB, Secondary eNB, a network node belonging to Master cell group (MCG) or Secondary Cell Group (SCG), base station (BS), multi-standard radio (MSR) radio node such as MSR BS, eNodeB, network controller, radio network controller (RNC), base station controller (BSC), relay, donor node controlling relay, base transceiver station (BTS), access point (AP), transmission points, transmission nodes, Remote Radio Unit (RRU), Remote Radio Head (RRH), nodes in distributed antenna system (DAS), core network node e.g. Mobility Switching Centre (MSC), Mobile Management Entity (MME) etc., Operation and Maintenance (O&M), Operation Support System (OSS), Self-Organizing Network (SON), positioning node e.g. Evolved Serving Mobile Location Centre (E-SMLC), Minimizing Drive Test (MDT) etc.

In some embodiments the non-limiting term wireless device or user equipment (UE) is used and it refers to any type of wireless device communicating with a network node and/or with another UE in a cellular or mobile communication system. Examples of UE are target device, device-to-device (D2D) UE, proximity capable UE (aka ProSe UE), machine type UE or UE capable of machine to machine (M2M) communication, PDA, PAD, Tablet, mobile terminals, smart phone, laptop embedded equipped (LEE), laptop mounted equipment (LME), USB dongles etc.

The embodiments are described for 5G. However the embodiments are applicable to any RAT or multi-RAT systems, where the UE receives and/or transmit signals (e.g. data) e.g. LTE, LTE FDD/TDD, WCDMA/HSPA, GSM/GERAN, Wi Fi, WLAN, CDMA2000 etc.

As will be readily understood by those familiar with communications design, that functions means or modules may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a wireless device or network node, for example.

Alternatively, several of the functional elements of the processing means discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware, read-only memory (ROM) for storing software, random-access memory for storing software and/or program or application data, and non-volatile memory. Other hardware, conventional and/or custom, may also be included. Designers of communications devices will appreciate the cost, performance, and maintenance trade-offs inherent in these design choices.

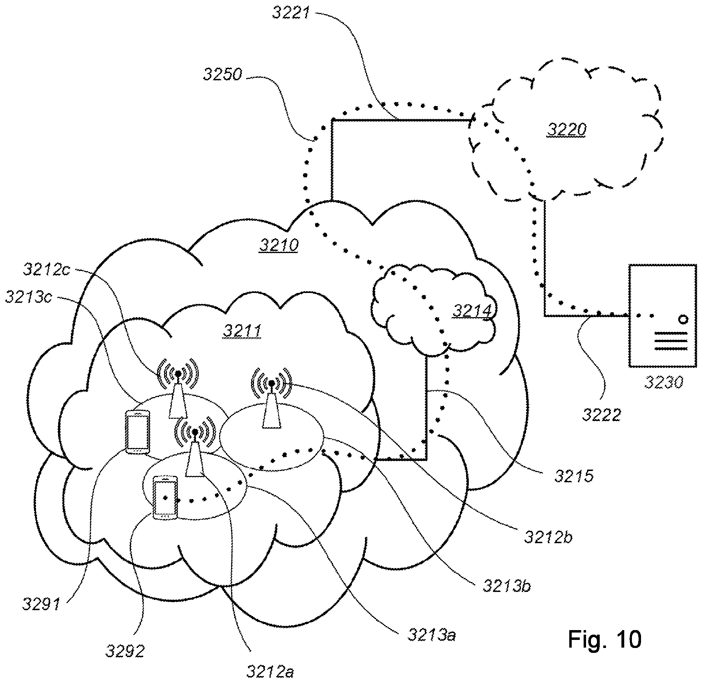

With reference to **Fig 10,** in accordance with an embodiment, a communication system includes a telecommunication network 3210, such as a 3GPP-type cellular network, which comprises an access network 3211, such as a radio access network, and a core network 3214. The access network 3211 comprises a plurality of base stations 3212a, 3212b, 3212c, such as NBs, eNBs, gNBs or other types of wireless access points being examples of the radio network node 12 herein, each defining a corresponding coverage area 3213a, 3213b, 3213c. Each base station 3212a, 3212b, 3212c is connectable to the core network 3214 over a wired or wireless connection 3215. A first user equipment (UE) 3291, being an example of the UE 10, located in coverage area 3213c is configured to wirelessly connect to, or be paged by, the corresponding base station 3212c. A second UE 3292 in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The communication system of Figure 10 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signalling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

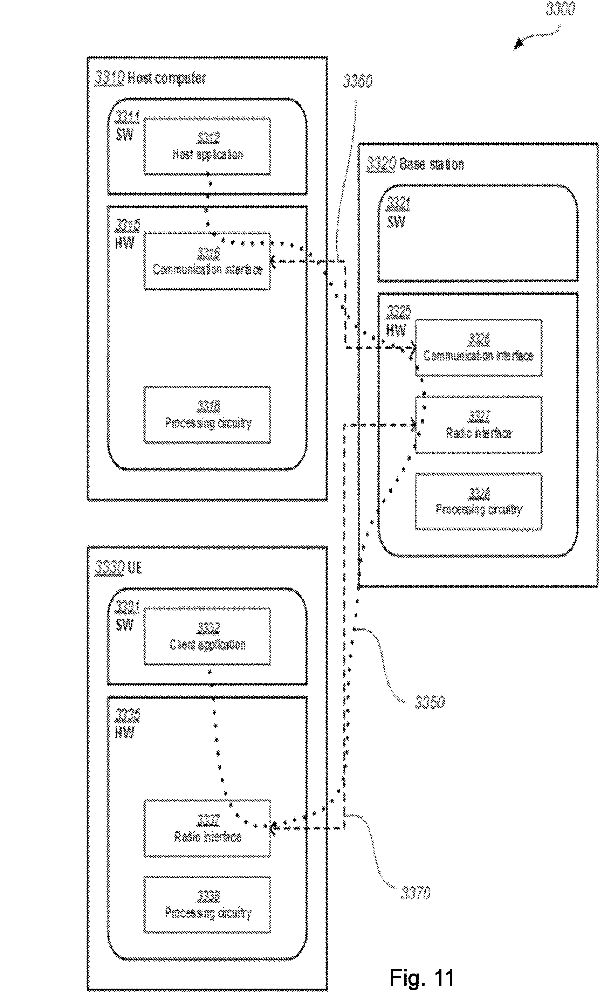

Example implementations, in accordance with an embodiment, of the UE, base station and host computer discussed in the preceding paragraphs will now be described with reference to **Fig. 11.** In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown in Fig.11) served by the base station 3320. The communication interface 3326 may be configured to facilitate a connection 3360 to the host computer 3310. The connection 3360 may be direct or it may pass through a core network (not shown in Fig.11) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

It is noted that the host computer 3310, base station 3320 and UE 3330 illustrated in Fig. 11 may be identical to the host computer 3230, one of the base stations 3212a, 3212b, 3212c and one of the UEs 3291, 3292 of Fig. 10, respectively. This is to say, the inner workings of these entities may be as shown in Fig. 11 and independently, the surrounding network topology may be that of Fig. 10.

In Fig. 11, the OTT connection 3350 has been drawn abstractly to illustrate the communication between the host computer 3310 and the user equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may achieve low data interruption (interference between the systems is minimized), and thereby provide benefits such as improved battery time of the UE, and better responsiveness.

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signalling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

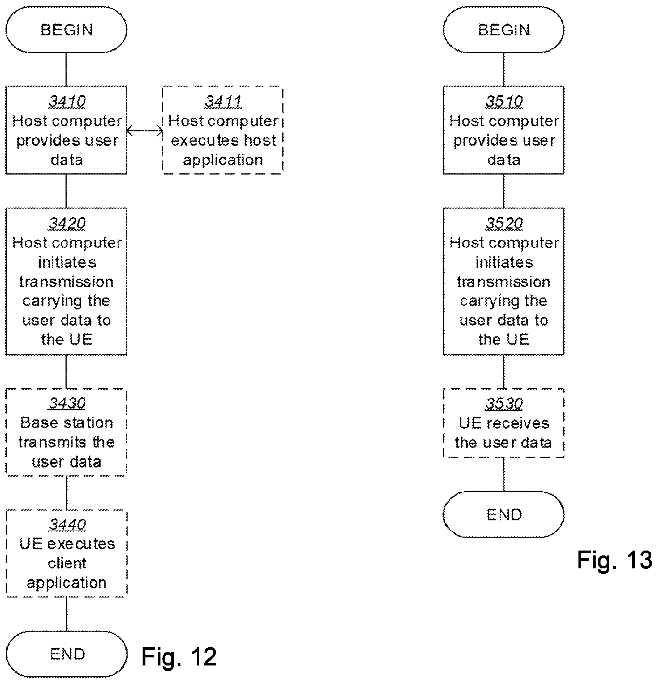

**Fig. 12** is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 12 will be included in this section. In a first step 3410 of the method, the host computer provides user data. In an optional substep 3411 of the first step 3410, the host computer provides the user data by executing a host application. In a second step 3420, the host computer initiates a transmission carrying the user data to the UE. In an optional third step 3430, the base station transmits to the UE the user data which was carried in the transmission that the host computer initiated, in accordance with the teachings of the embodiments described throughout this disclosure. In an optional fourth step 3440, the UE executes a client application associated with the host application executed by the host computer.

**Fig. 13** is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 13 will be included in this section. In a first step 3510 of the method, the host computer provides user data. In an optional substep (not shown) the host computer provides the user data by executing a host application. In a second step 3520, the host computer initiates a transmission carrying the user data to the UE. The transmission may pass via the base station, in accordance with the teachings of the embodiments described throughout this disclosure. In an optional third step 3530, the UE receives the user data carried in the transmission.

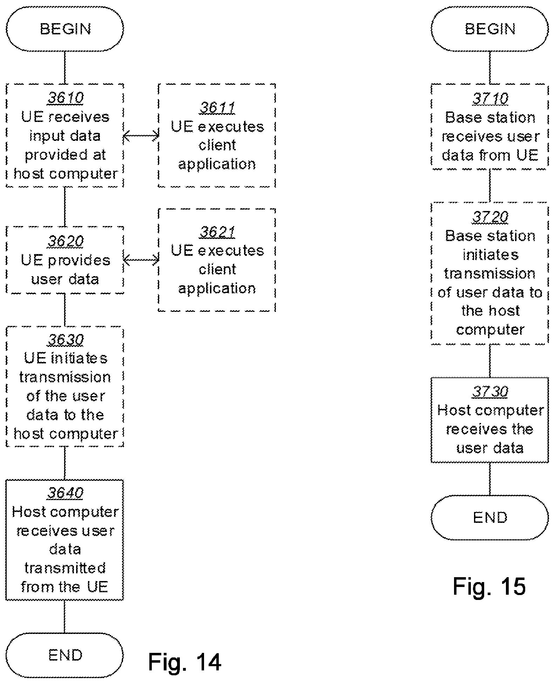

**Fig. 14** is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 14 will be included in this section. In an optional first step 3610 of the method, the UE receives input data provided by the host computer. Additionally or alternatively, in an optional second step 3620, the UE provides user data. In an optional substep 3621 of the second step 3620, the UE provides the user data by executing a client application. In a further optional substep 3611 of the first step 3610, the UE executes a client application which provides the user data in reaction to the received input data provided by the host computer. In providing the user data, the executed client application may further consider user input received from the user. Regardless of the specific manner in which the user data was provided, the UE initiates, in an optional third substep 3630, transmission of the user data to the host computer. In a fourth step 3640 of the method, the host computer receives the user data transmitted from the UE, in accordance with the teachings of the embodiments described throughout this disclosure.

**Fig. 15** is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 15 will be included in this section. In an optional first step 3710 of the method, in accordance with the teachings of the embodiments described throughout this disclosure, the base station receives user data from the UE. In an optional second step 3720, the base station initiates transmission of the received user data to the host computer. In a third step 3730, the host computer receives the user data carried in the transmission initiated by the base station.

It will be appreciated that the foregoing description and the accompanying drawings represent non-limiting examples of the methods and apparatus taught herein. As such, the apparatus and techniques taught herein are not limited by the foregoing description and accompanying drawings. Instead, the embodiments herein are limited only by the following claims.

| Abbreviation | Explanation |
| --- | --- |
| 3GPP | 3rd Generation Partnership Project |
| 5G | 5th Generation |
| 5GS | 5G System |
| 5GC | 5G Core network |
| CHO | Conditional Handover |
| CR | Change Request |
| DAPS | Dual Active Protocol Stack |
| DRB | Data Radio Bearer |
| E-UTRAN | Evolved Universal Terrestrial Access Network |
| gNB | 5G Node B |
| HO | Handover |
| LTE | Long-term Evolution |
| NG | The interface/reference point between the RAN and the CN in 5G/NR. |
| NG-C | The control plane part of NG (between a gNB and an AMF). |
| NG-U | The user plane part of NG (between a gNB and a UPF). |
| NG-RAN | Next Generation Radio Access Network |
| NR | New Radio |
| PDCP | Packet Data Convergence Protocol |
| PDU | Protocol Data Unit |
| RAN | Radio Access Network |
| RB | Radio Bearer |
| RLC | Radio Link Control |
| ROHC | Robust Header Compression |
| RRC | Radio Resource Control |
| SDU | Service Data Unit |
| SGW | Serving Gateway |
| SN | Sequence Number |
| TS | Technical Specification |
| UE | User Equipment |
| UL | Uplink |
| UPF | User Plane Function |
| Xn | The interface/reference point between two gNBs |

**Claims**

1. A method performed by a radio network node (12) for handling communication in a wireless communication network, the method comprising:

   - scheduling (1003) a user equipment, UE, served by the radio network node in a first cell of a first radio access technology, RAT, to a resource part of a total bandwidth for the first RAT for communicating, wherein resource parts of the total bandwidth have different maximum power limits, and the resource part is selected based on a pathloss of the UE, wherein scheduling of the UE comprise scheduling UEs according to a UE list comprising UEs arranged in an order defined by maximum transmission power of the UEs, matched with a frequency list defining resource parts ordered in a maximum power limit order.

2. The method according to claim 1, wherein the different maximum power limits are related to a bandwidth distance to a second bandwidth allocated to a second RAT, and wherein a first resource part of the total bandwidth that is closer to the second bandwidth than a second resource part of the total bandwidth, has a lower maximum power limit than the second resource part.

3. The method according to claim 2, wherein the first RAT is a terrestrial RAT and the second RAT is a non-terrestrial RAT.

4. The method according to any of the claims 2-3, further comprising

   - determining (1000) the different maximum power limits of one or more of the resource parts of the total bandwidth, wherein determining the different maximum power limits comprises: measuring out of band emission of each resource part as a function of UE's transmission power; determining a total level of out of band emissions $L$ transmitted from UEs towards a second network node of the second RAT; determining number of UEs $K$ that are able to simultaneously interfere with the second network node; and defining the maximum power limit for the nth resource part $P_n^{max}$ according to the equation

   $$L_n(dBm) = L(dBm) - 10log_{10}(K) = f_n(P_n^{max}) \; ;$$

   and/or
   - obtaining (1001) a maximum transmission power of the UE; and/or
   - determining (1002) number of resource parts needed for the UE.

5. The method according to claim 4, wherein the scheduling of the UE is based on one or more of the following: determined maximum power limit of radio resources; obtained maximum transmission power of the UE; and determined number of resource parts needed.

6. The method according to any of the claims 1-5, wherein scheduling of the UE comprise adjusting obtained maximum transmission power of the UE to a maximum transmission power limit of the selected resource part, and the method further comprises transmitting a transmit power command comprising an indication of the adjusted maximum transmission power.

7. A computer program product (1406) comprising instructions, which, when executed on at least one processor, cause the at least one processor to carry out the methods according to any of the claims 1-6, as performed by the radio network node (12).

8. A computer-readable storage medium (1407), having stored thereon a computer program product comprising instructions which, when executed on at least one processor, cause the at least one processor to carry out the methods according to any of the claims 1-6, as performed by the radio network node (12).

9. A radio network node (12) for handling communication in a wireless communication network, wherein the radio network node is configured to:
   schedule (504) a user equipment, UE, served by the radio network node in a first cell of a first radio access technology, RAT, to a resource part of a total bandwidth for the first RAT for communicating, wherein resource parts of the total bandwidth have different maximum power limits, and the resource part is selected based on a pathloss of the UE, wherein the radio network node is configured to schedule UEs according to a UE list comprising UEs arranged in an order defined by maximum transmission power of the UEs, matched with a frequency list defining resource parts ordered in a maximum power limit order.

10. The radio network node (12) according to claim 9, wherein the different maximum power limits are related to a bandwidth distance to a second bandwidth allocated to a second RAT, and wherein a first resource part of the total bandwidth that is closer to the second bandwidth than a second resource part of the total bandwidth, has a lower maximum power limit than the second resource part.

11. The radio network node (12) according to claim 10, wherein the first RAT is a terrestrial RAT and the second RAT is a non-terrestrial RAT.

12. The radio network node according to any of the claims 10-11, wherein the radio network node is further configured to

determine the different maximum power limits of one or more of the resource parts of the total bandwidth, wherein the radio network node is configured to determine the different maximum power limits by: measuring out of band emission of each resource part as a function of UE's transmission power; determining a total level of out of band emissions $L$ transmitted from UEs towards a second network node of the second RAT; determining number of UEs $K$ that are able to simultaneously interfere with the second network node; and defining the maximum power limit for the nth resource part $P_n^{max}$ according to the equation

$$L_n(dBm) = L(dBm) - 10log_{10}(K) = f_n(P_n^{max});$$

and/or
obtain a maximum transmission power of the UE; and/or
determine number of resource parts needed for the UE.

13. The radio network node according to claim 12, wherein the radio network node is configured to schedule the UE based on one or more of the following: determined maximum power limit of radio resources; obtained maximum transmission power of the UE; and determined number of resource parts needed.

14. The radio network node (12) according to any of the claims 9-13, wherein the radio network node is configured to schedule the UE by adjusting obtained maximum transmission power of the UE to a maximum transmission power limit of the selected resource part, and wherein the radio network node is configured to transmit a transmit power command comprising an indication of the adjusted maximum transmission power.

**Patentansprüche**

1. Verfahren, das durch einen Funknetzwerkknoten (12) durchgeführt wird, zum Abwickeln von Kommunikation in einem drahtlosen Kommunikationsnetzwerk, wobei das Verfahren Folgendes umfasst:

- Planen (1003) eines Benutzergeräts, UE, das durch den Funknetzwerkknoten in einer ersten Zelle einer ersten Funkzugangstechnologie, RAT, bedient wird, zu einer Ressource, die Teil einer Gesamtbandbreite für die erste RAT ist, zur Kommunikation, wobei Ressourcenteile der Gesamtbandbreite unterschiedliche maximale Leistungsgrenzen aufweisen und der Ressourcenteil basierend auf einem Pfadverlust des UE ausgewählt wird, wobei das Planen des UE Planen von UEs gemäß einer UE-Liste umfasst, die UEs umfasst, die in einer Reihenfolge angeordnet sind, die durch die maximale Übertragungsleistung der UEs definiert ist, und mit einer Frequenzliste übereinstimmt, die Ressourcenteile definiert, die in einer Reihenfolge der maximalen Leistungsgrenze geordnet sind.

2. Verfahren nach Anspruch 1, wobei sich die unterschiedlichen maximalen Leistungsgrenzen auf einen Bandbreitenabstand zu einer zweiten Bandbreite, die einer zweiten RAT zugewiesen ist, beziehen und wobei ein erster Ressourcenteil der Gesamtbandbreite, der näher an der zweiten Bandbreite liegt als ein zweiter Ressourcenteil der Gesamtbandbreite, eine niedrigere maximale Leistungsgrenze als der zweite Ressourcenteil aufweist.

3. Verfahren nach Anspruch 2, wobei die erste RAT eine terrestrische RAT ist und die zweite RAT eine nicht terrestrische RAT ist.

4. Verfahren nach einem der Ansprüche 2-3, ferner umfassend

- Bestimmen (1000) der unterschiedlichen maximalen Leistungsgrenzen von einem oder mehreren der Ressourcenteile der Gesamtbandbreite, wobei das Bestimmen der unterschiedlichen maximalen Leistungsgrenzen Folgendes umfasst: Messen von Emissionen außerhalb des Bandes von jedem Ressourcenteil in Abhängigkeit von der Übertragungsleistung des UE; Bestimmen eines Gesamtniveaus von Emissionen außerhalb des Bandes $L$, die von UEs in Richtung eines zweiten Netzwerkknotens der zweiten RAT übertragen werden; Bestimmen einer Anzahl von UEs K, die in der Lage sind, gleichzeitig den zweiten Netzwerkknoten zu stören; und Definieren der maximalen Leistungsgrenze für den n-ten Ressourcenteil $P_n^{max}$ gemäß der Gleichung

$$L_n(dBm) = L(dBm) - 10log_{10}(K) = f_n(P_n^{max});$$

und/oder
- Erlangen (1001) einer maximalen Übertragungsleistung des UE; und/oder
- Bestimmen (1002) einer für das UE benötigten Anzahl an Ressourcenteilen.

5. Verfahren nach Anspruch 4, wobei das Planen des UE auf einem oder mehreren des Folgenden basiert: einer bestimmten maximalen Leistungsgrenze von Funkressourcen; einer erlangten maximalen Übertragungsleistung des UE; und einer bestimmten Anzahl an benötigten Ressourcenteilen.

6. Verfahren nach einem der Ansprüche 1-5, wobei das Planen des UE Anpassen der erlangten maximalen Übertragungsleistung des UE an eine maximale Übertragungsleistungsgrenze des ausgewählten Ressourcenteils umfasst und das Verfahren ferner Übertragen eines Übertragungsleistungsbefehls, der eine Angabe der angepassten maximalen Übertragungsleistung umfasst, umfasst.

7. Computerprogrammprodukt (1406), umfassend Anweisungen, die bei Ausführung auf mindestens einem Prozessor den mindestens einen Prozessor dazu veranlassen, die Verfahren nach einem der Ansprüche 1-6 auszuführen, wie sie durch den Funknetzwerkknoten (12) durchgeführt werden.

8. Computerlesbares Speichermedium (1407), das ein darauf gespeichertes Computerprogrammprodukt aufweist, das Anweisungen umfasst, die bei Ausführung auf mindestens einem Prozessor den mindestens einen Prozessor dazu veranlassen, die Verfahren nach einem der Ansprüche 1-6 auszuführen, wie sie durch den Funknetzwerkknoten (12) durchgeführt werden.

9. Funknetzwerkknoten (12) zum Abwickeln von Kommunikation in einem drahtlosen Kommunikationsnetzwerk, wobei der Funknetzwerkknoten zu Folgendem konfiguriert ist:

- Planen (504) eines Benutzergeräts, UE, das durch den Funknetzwerkknoten in einer ersten Zelle einer ersten Funkzugangstechnologie, RAT, bedient wird, zu einer Ressource, die Teil einer Gesamtbandbreite für die erste RAT ist, zur Kommunikation, wobei Ressourcenteile der Gesamtbandbreite unterschiedliche maximale Leistungsgrenzen aufweisen und der Ressourcenteil basierend auf einem Pfadverlust des UE ausgewählt wird, wobei der Funknetzwerkknoten dazu konfiguriert ist, UEs gemäß einer UE-Liste zu planen, die UEs umfasst, die in einer Reihenfolge angeordnet sind, die durch die maximale Übertragungsleistung der UEs definiert ist, und mit einer Frequenzliste übereinstimmt, die Ressourcenteile definiert, die in einer Reihenfolge der maximalen Leistungsgrenze geordnet sind.

10. Funknetzwerkknoten (12) nach Anspruch 9, wobei sich die unterschiedlichen maximalen Leistungsgrenzen auf einen Bandbreitenabstand zu einer zweiten Bandbreite, die einer zweiten RAT zugewiesen ist, beziehen und wobei ein erster Ressourcenteil der Gesamtbandbreite, der näher an der zweiten Bandbreite liegt als ein zweiter Ressourcenteil der Gesamtbandbreite, eine niedrigere maximale Leistungsgrenze als der zweite Ressourcenteil aufweist.

11. Funknetzwerkknoten (12) nach Anspruch 10, wobei die erste RAT eine terrestrische RAT ist und die zweite RAT eine nicht terrestrische RAT ist.

12. Funknetzwerkknoten nach einem der Ansprüche 10-11, wobei der Funknetzwerkknoten ferner zu Folgendem konfiguriert ist:

Bestimmen der unterschiedlichen maximalen Leistungsgrenzen von einem oder mehreren der Ressourceteile der Gesamtbandbreite, wobei der Funknetzwerkknoten dazu konfiguriert ist, die unterschiedlichen maximalen Leistungsgrenzen durch Folgendes zu bestimmen: Messen von Emissionen außerhalb des Bandes von jedem Ressourceteil in Abhängigkeit von der Übertragungsleistung des UE; Bestimmen eines Gesamtniveaus von Emissionen außerhalb des Bandes $L$, die von UEs in Richtung eines zweiten Netzwerkknotens der zweiten RAT übertragen werden; Bestimmen einer Anzahl von UEs $K$, die in der Lage sind, gleichzeitig den zweiten Netzwerkknoten zu stören; und Definieren der maximalen Leistungsgrenze für den $n$-ten Ressourceteil $P_n^{max}$ gemäß der Gleichung

$$L_n(dBm) = L(dBm) - 10log_{10}(K) = f_n(P_n^{max});$$

und/oder
Erlangen einer maximalen Übertragungsleistung des UE; und/oder Bestimmen einer für das UE benötigten Anzahl an Ressourceteilen.

13. Funknetzwerkknoten nach Anspruch 12, wobei der Funknetzwerkknoten dazu konfiguriert ist, das UE basierend auf einem oder mehreren des Folgenden zu planen: einer bestimmten maximalen Leistungsgrenze von Funkressourcen; einer erlangten maximalen Übertragungsleistung des UE; und einer bestimmten Anzahl an benötigten Ressourcenteilen.

14. Funknetzwerkknoten (12) nach einem der Ansprüche 9-13, wobei der Funknetzwerkknoten dazu konfiguriert ist, das UE durch Anpassen der erlangten maximalen Übertragungsleistung des UE an eine maximale Übertragungsleistungsgrenze des ausgewählten Ressourceteils zu planen, und wobei der Funknetzwerkknoten dazu konfiguriert ist, einen Übertragungsleistungsbefehl, der eine Angabe der angepassten maximalen Übertragungsleistung umfasst, zu übertragen.

## Revendications

1. Procédé mis en œuvre par un nœud de réseau radio (12) pour gérer des communications dans un réseau de communication sans fil, le procédé comprenant :

   - la planification (1003) d'un équipement utilisateur, UE, desservi par le nœud de réseau radio dans une première cellule d'une première technologie d'accès radio, RAT, vers une partie de ressource d'une bande passante totale pour la première RAT pour la communication, dans lequel les parties de ressource de la bande passante totale ont des limites de puissance maximale différentes, et la partie de ressource est sélectionnée sur la base d'une perte de trajet de l'UE, dans lequel la planification de l'UE comprend la planification des UE selon une liste d'UE comprenant des UE disposés dans un ordre défini par la puissance de transmission maximale des UE, mise en correspondance avec une liste de fréquences définissant des parties de ressource ordonnées dans un ordre de limite de puissance maximale.

2. Procédé selon la revendication 1, dans lequel les différentes limites de puissance maximale sont liées à une distance de bande passante par rapport à une seconde bande passante allouée à une seconde RAT, et dans lequel une première partie de ressource de la bande passante totale qui est plus proche de la seconde bande passante qu'une seconde partie de ressource de la bande passante totale, a une limite de puissance maximale inférieure à la seconde partie de ressource.

3. Procédé selon la revendication 2, dans lequel la première RAT est une RAT terrestre et la seconde RAT est une RAT non terrestre.

4. Procédé selon l'une quelconque des revendications 2 à 3, comprenant en outre

   - la détermination (1000) des différentes limites de puissance maximale d'une ou plusieurs parties de ressource de la bande passante totale, la détermination des différentes limites de puissance maximale comprenant : la mesure de l'émission hors bande de chaque partie de ressource en fonction de la puissance de transmission de l'UE ; la détermination d'un niveau total d'émissions hors bande $L$ transmises par les UE vers un second nœud de réseau de la seconde RAT ; la détermination du nombre d'UE $K$ capables d'interférer simultanément avec le second nœud de réseau ; et la définition de la limite de puissance maximale pour la *n*-ième partie de ressource $P_n^{max}$ selon l'équation

$$L_n(dBm) = L(dBm) - 10log_{10}(K) = f_n(P_n^{max}) \text{ ;}$$

et/ou
- l'obtention (1001) d'une puissance de transmission maximale de l'UE ; et/ou
- la détermination (1002) du nombre de parties de ressource nécessaires à l'UE.

5. Procédé selon la revendication 4, dans lequel la planification de l'UE est basée sur un ou plusieurs des éléments suivants : la limite de puissance maximale déterminée des ressource radio ; la puissance de transmission maximale obtenue de l'UE ; et le nombre déterminé de parties de ressource nécessaires.

6. Procédé selon l'une quelconque des revendications 1 à 5, dans lequel la planification de l'UE comprend l'ajustement de la puissance de transmission maximale obtenue de l'UE à une limite de puissance de transmission maximale de la partie de ressource sélectionnée, et le procédé comprend en outre la transmission d'une commande de puissance de transmission comprenant une indication de la puissance de transmission maximale ajustée.

7. Produit de programme informatique (1406) comprenant des instructions qui, lorsqu'elles sont exécutées sur au moins un processeur, amènent l'au moins un processeur à mettre en œuvre les procédés selon l'une quelconque des revendications 1 à 6, tels qu'ils sont mis en œuvre par le nœud de réseau radio (12).

8. Support de stockage lisible par ordinateur (1407), sur lequel est stocké un produit de programme informatique comprenant des instructions qui, lorsqu'elles sont exécutées sur au moins un processeur, amènent l'au moins un processeur processeurs à mettre en œuvre les procédés selon l'une quelconque des revendications 1 à 6, tels qu'ils sont mis en œuvre par le nœud de réseau radio (12).

9. Nœud de réseau radio (12) pour gérer les communications dans un réseau de communication sans fil, le nœud de réseau radio étant configuré pour :
planifier (504) un équipement utilisateur, UE, desservi par le nœud de réseau radio dans une première cellule d'une première technologie d'accès radio, RAT, vers une partie de ressource d'une bande passante totale pour la première RAT pour la communication, dans lequel les parties de ressource de la bande passante totale ont des limites de puissance maximale différentes, et la partie de ressource est sélectionnée sur la base d'une perte de trajet de l'UE, dans lequel le nœud de réseau radio est configuré pour planifier des UE selon une liste d'UE comprenant des UE disposés dans un ordre défini par la puissance de transmission maximale des UE, mise en correspondance avec une liste de fréquences définissant des parties de ressource ordonnées dans un ordre de limite de puissance maximale.

10. Nœud de réseau radio (12) selon la revendication 9, dans lequel les différentes limites de puissance maximale sont liées à une distance de bande passante par rapport à une seconde bande passante allouée à une seconde RAT, et dans lequel une première partie de ressource de la bande passante totale qui est plus proche de la seconde bande passante qu'une seconde partie de ressource de la bande passante totale, a une limite de puissance maximale inférieure à la seconde partie de ressource.

11. Nœud de réseau radio (12) selon la revendication 10, dans lequel la première RAT est une RAT terrestre et la seconde RAT est un RAT non terrestre.

12. Nœud de réseau radio selon l'une quelconque des revendications 10 et 11, configuré pour

déterminer les différentes limites de puissance maximale d'une ou plusieurs ressources de la bande passante totale, dans lequel le nœud de réseau radio est configuré pour déterminer les différentes limites de puissance maximale : en mesurant l'émission hors bande de chaque ressource en fonction de la puissance d'émission de l'UE ; en déterminant le niveau total d'émissions hors bande L transmises par les UE vers un second nœud de réseau de la seconde RAT ; en déterminant le nombre d'UE K capables d'interférer simultanément avec le second nœud de réseau ; et en définissant la limite de puissance maximale pour la n-ième ressource $P_n^{max}$ selon l'équation.

$$L_n(dBm) = L(dBm) - 10log_{10}(K) = f_n(P_n^{max}) ;$$

et/ou

obtenir une puissance de transmission maximale de l'UE ; et/ou déterminer le nombre de parties de ressource nécessaires à l'UE.

13. Nœud de réseau radio selon la revendication 12, dans lequel le nœud de réseau radio est configuré pour planifier l'UE sur la base d'un ou plusieurs des éléments suivants : la limite de puissance maximale déterminée des ressources radio ; la puissance de transmission maximale obtenue de l'UE ; et le nombre déterminé de parties de ressource nécessaires.

14. Nœud de réseau radio (12) selon l'une quelconque des revendications 9 à 13, dans lequel le nœud de réseau radio est configuré pour planifier l'UE en ajustant la puissance de transmission maximale obtenue de l'UE à une limite de puissance de transmission maximale de la partie de ressource sélectionnée, et dans lequel le nœud de réseau radio est configuré pour transmettre une commande de puissance de transmission comprenant une indication de la puissance de transmission maximale ajustée.

$$L_n(dBm) = L(dBm) - 10log_{10}(K) = f_n(P_n^{max}) ;$$

| | n77 | |
|---|---|---|
| 3300 | | 4200MHz |

| | n78 | |
|---|---|---|
| 3300 | | 3800 MHz |

Phase 1 – 2020/2021

| B48/n48 (CBRS 150MHz) | US C-Band (100MHz) | Satellite(380MHz) |
|---|---|---|
| 3550 | 3700 | 3800 3820 | 4200MHz |

Phase 2 – 2022/2023

| B48/n48 (CBRS 150MHz) | US C-Band (280MHz) | Satellite(200MHz) |
|---|---|---|
| 3550 | 3700 | 3980 4000 | 4200MHz |

Fig. 1

Fig. 2

Fig. 3

Fig. 4

EP 4 316 031 B1

**501.** Determine maximum power limit per resource part

**502.** Obtain maximum transmission power of UE

**503.** Determine number of resource parts per UE

**504.** Schedule UE

505. Scheduling information

506. Communication

Fig. 5

EP 4 316 031 B1

Fig. 6

Fig. 7

```
                    ┌─────────────┐
                    │    Start    │
                    └─────────────┘
```

**1000.** Determine maximum power limit

**1001.** Obtain maximum transmission power per UE

**1002.** Determine nr of resource parts

**1003.** Schedule resource part to UE

**1004.** Transmit scheduling information

```
                    ┌─────────────┐
                    │     End     │
                    └─────────────┘
```

Fig. 8

EP 4 316 031 B1

## 12. Radio network node

### 1401. Processing circuitry

1402. Scheduling unit

1403. Determining unit

1404. Obtaining unit

1405. Transmitting unit

1408. Memory

13

10

## 12. Radio network node

### 1401. Processing circuitry

1408. Memory

1409. Communication interface

1407

1406

Fig. 9

Fig. 10

EP 4 316 031 B1

Fig. 11

BEGIN

**3410**
Host computer provides user data

**3411**
Host computer executes host application

**3420**
Host computer initiates transmission carrying the user data to the UE

**3430**
Base station transmits the user data

**3440**
UE executes client application

END

Fig. 12

BEGIN

**3510**
Host computer provides user data

**3520**
Host computer initiates transmission carrying the user data to the UE

**3530**
UE receives the user data

END

Fig. 13

**Fig. 15**

BEGIN

*3710*
Base station receives user data from UE

*3720*
Base station initiates transmission of user data to the host computer

*3730*
Host computer receives the user data

END

**Fig. 14**

BEGIN

*3610*
UE receives input data provided at host computer

*3611*
UE executes client application

*3620*
UE provides user data

*3621*
UE executes client application

*3630*
UE initiates transmission of the user data to the host computer

*3640*
Host computer receives user data transmitted from the UE

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019313343 A1
- US 2018049180 A1
- EP 2124471 A1

**Non-patent literature cited in the description**

- *3GPP TS 38.300*, June 2018